Europäisches Patentamt

(19) **European Patent Office**

Office européen des brevets

(11) Veröffentlichungsnummer: **0 039 396**

**B2**

(12) # NEUE EUROPÄISCHE PATENTSCHRIFT

(45) Veröffentlichungstag der neuen Patentschrifft: 21.03.90

(51) Int. Cl.⁵: **C 08 L 23/12**, C 08 L 23/16

(21) Anmeldenummer: **81101750.8**

(22) Anmeldetag: **10.03.81**

(54) Ternäre thermoplastische Formmasse enthaltend Propylen-Homopolymer.

(30) Priorität: **02.04.80 DE 3012805**

(43) Veröffentlichungstag der Anmeldung: **11.11.81 Patentblatt 81/45**

(45) Bekanntmachung des Hinweises auf die Patenterteilung: **05.06.85 Patentblatt 85/23**

(45) Bekanntmachung des Hinweises auf die Entscheidung über den Einspruch: **21.03.90 Patentblatt 90/12**

(84) Bennante Vertragsstaaten: **AT BE CH DE FR GB IT LI LU NL SE**

(56) Entgegenhaltungen:
EP-A-0 004 313
EP-A-0 006 620
DE-A-2 640 850
DE-A-2 642 053
DE-A-2 644 644
DE-A-2 732 969
DE-A-2 821 342
US-A-3 919 358

Firma Hüls, Der Lichtbogen, September 1974, S. 18-22.
Schreier und Peitscher, Z. Anal. Chem., 258 (1972), S. 119-202.
Dupont, "Nordel, an Impact Modifier for Homo-Polypropylene, 22.3.77
Dupont, "Modification of Polyolefins with Nordel Hydrocarbon Rubber, 18.3.80
Die Akte enthält technische Angaben, die nach dem Eingang der Anmeldung eingereicht wurden und die nicht in dieser Patentschrift enthalten sind.

(73) Patentinhaber: **Dynamit Nobel Aktiengesellschaft**
Postfach 12 61
D-5210 Troisdorf (DE)

(72) Erfinder: **Kühnel, Werner**
D-5206 Neunkirchen-Schöneshof (DE)
Erfinder: **Spielau, Paul, Dr.**
Van-Gogh-Platz 10
D-5210 Troisdorf-Eschmar (DE)
Erfinder: **Klingberg, Gerd**
Heckenweg 17
D-5204 Lohmar 1 (DE)
Erfinder: **Konermann, Hans-Ewald, Dr.**
Kiefernstrasse 2
D-5210 Troisdorf (DE)
Erfinder: **Leeder, Wilfried**
Petersbergstrasse 11
D-5210 Troisdorf (DE)
Erfinder: **Welsch, Dietmar**
Schlesische Strasse 6
D-8832 Weissenburg/Bay (DE)

LIBERGRAF, STOCKHOLM 1990

**Beschreibung**

Die Erfindung betrifft eine ternäre Formmasse auf Basis von Ethylen-Propylen-Mischpolymerisat, Propylen-Homopolymer und Polyethylen.

Polypropylen besitzt neben einigen sehr günstigen Eigenschaften, wie beispielsweise einer relativ niedrigen Dichte, einer ausgezeichneten Beständigkeit gegen höhere Temperaturen und wässrigen und nichtwässrigen Flüssigkeiten, auch weniger günstige Eigenschaften, wozu die mangelhafte Schlagfestigkeit bei Temperaturen unterhalb Raumtemperatur, insbesondere unterhalb 0°C zu zählen ist. Ausreichende Schlagfestigkeit, ist jedoch für viele Anwendungen, wie z. B. Transportkästen, Koffer, Automobilteile und ähnliche erforderlich und von Bedeutung.

Polyethylen hoher Dichte, aus welchem man derartige Formteile gewöhnlich herstellt, besitzt zwar diese gute hohe Schlagfestigkeit, zeigt jedoch eine geringere Beständigkeit gegen hohe Temperaturen.

Die Ethylen-Propylen-Mischpolymerisate, sowohl die gesättigten als auch die ungesättigten, weisen neben guten mechanischen Eigenschaften hohe Alterungs- und Ozonfestigkeit und Kältefestigkeit auf, so daß sie insbesondere auch für der Bewitterung ausgesetzte Anwendungen hervorragend geeignet sind. Wegen ihrer kautschukartigen Eigenschaften versetzt man sie gerne mit härteren Polymeren.

Man hat nun vielfach versucht, die Eigenschaften von Polypropylen und/oder Polyethylen und/oder Ethylen-Propylen-Mischpolymerisaten durch Herstellen binärer oder ternärer Formmassen zu verbinden. Beispielsweise ist es bekannt, Gemische aus Polypropylen und Polyethylen zu verwenden, die jedoch eine kaum verbesserte Schlagfestigkeit im Vergleich zu Polypropylen allein besitzen. Aus den DE-OS-2 202 706 und 2 202 738 sind Abmischungen aus isotaktischem Polypropylen und Ethylen-Propylen-Kautschuken bekannt, die entweder durch Zugabe von Vulkanisationsmitteln nach der Abmischung teilvernetzt werden oder bei deren Herstellung bereits teilvernetztes EPM eingesetzt wird. Solche Mischungen sind jedoch in Bezug auf die erreichbaren Zugfestigkeitswerte, die Bruchdehnungswerte, die Weiterreißfestigkeiten sowie die Härtewerte, gemessen bei 100°C für viele Anwendungsfälle noch verbesserungsbedürftig, d. h. sie genügen den gestellten Anforderungen nicht für alle Anwendungsfälle.

Abmischungen von Polyethylen mit EPDM-Polymeren, deren Kristallinität zwischen 10 bis 20 % liegt, sind aus der US-PS-3 919 358 bekannt. Derartige Produkte besitzen zwar hohe Reißfestigkeiten, aber wegen der niedrigen Schmelztemperatur des Polyethylens keine ausreichende Wärmebeständigkeit, auch die bleibende Verformung, die Steifigkeit und die Härte sind unbefriedigend.

Aus der DE-OS-2 732 969 ist eine binäre Formmasse aus unvernetzten Ethylen-Propylen-Sequenz-Polymeren mit isotaktischem Polypropylen bekannt. Es hat sich jedoch gezeigt, daß solche Abmischungen je nach Zusammensetzung entweder keine ausreichende Kälteflexibilität oder keine ausreichende Wärmeformbeständigkeit aufweisen.

Die aus der GB-PS-1 154 447 bekannte ternäre Formmasse aus 50 bis 90 Gew.-% eines kristallinen Polypropylens, das zu mehr als 90 Gew.-% in n-Heptan unlöslich ist und 5 bis 30 Gew.-% Polyethylen und 5 bis 40 Gew.-% Ethylen-Propylen-Block-Copolymer, das in n-Heptan zu mindestens 80 Gew.-% unlöslich ist, zeigt eine Zugfestigkeit von nur 10 N/mm$^2$ und ist bei Temperaturen von unter –30°C nicht mehr flexibel.

Aus der DE-OS-2 828 763 ist eine Polypropylen-Formmasse aus 90 bis 60 Gew.-% Polypropylen, 4 bis 30 Gew.-% Polyethylen und 6 bis 30 Gew.-% eines kautschukartigen Ethylen-Propylen-Mischpolymerisates bekannt, bei der der Schmelzindex der Kautschukmischung aus Ethylen-Propylen-Mischpolymerisat und Polyethylen zu dem Schmelzindex des Polypropylens im Verhältnis von 2 - 15 der MFI (230/5) zueinander betragen soll. Die mit dieser Formmasse erzielbaren Eigenschaften lassen insbesondere, was beispielsweise die Kerbschlagzähigkeit bei sehr tiefen Temperaturen betrifft, nach wie vor wesentlich zu wünschen übrig, da hieraus hergestellte Produkte, wie beispielsweise Stoßstangen, bei Minusgraden von 30°C und mehr keineswegs gebrauchstüchtig mehr sind und somit beispielsweise diese Formmasse für diesen Anwendungszweck nicht brauchbar ist. Auch zeigen nicht alle Formmassen die gewünschte gute Verarbeitbarkeit im Spritzgießverfahren, wegen eines viel zu niedrigen Schmelzindizes.

Aus der DE-OS-2 742 910 hingegen ist ein thermoplastisches Elastomergemisch aus 25 bis 85 Gew.-% eines praktisch amorphen Ethylen-Propylen-Mischpolymerisates und 15 bis 75 Gew.-% eines kristallinen Blockmischpolymerisates von Propylen und ggf. zusätzlichem Polyethylen bekannt. Wie in der DE-OS-2 821 342 ausgeführt, ist diese Formmasse in Bezug auf die Härte, die Zugfestigkeit, bessere Beständigkeit gegen hohe Temperaturen verbesserungsbedürftig, und wird beispielsweise in diesen Eigenschaften durch eine Formmasse gemäß der DE-OS-2 821 342 übertroffen, wie die Tabellen 1 und 2 der DE-OS-2 821 342 nachweisen.

Aus der DE-OS-2 821 342 sind thermoplastische Elastomer-Gemische enthaltend 30 bis 75 Teile kristallines isotaktisches Propylen-Homopolymerisat und 25 bis 70 Teile eines im wesentlichen amorphen kautschukartigen Ethylen-Propylen-Polymerisates und maximal 15 Teile Polyethylen, die anteilig das Propylen-Homopolymerisat ersetzen, bekannt. Diese Gemische weisen zwar gegenüber binären Formmassen teils verbesserte Eigenschaften auf, die sie auch zur Herstellung von Stoßstangen für Kraftfahrzeuge geeigneter machen. Es hat sich jedoch gezeigt, daß für extreme Beanspruchungen, die mechanischen Eigenschaften der aus der DE-OS-2 821 342 bekannten Elastomer-Gemische insbesondere was die Kerbschlagzähigkeit, Zugfestigkeit und Kälteflexibilität angeht, noch verbesserungsbedürftig ist.

Der Erfindung liegt die Aufgabe zugrunde, eine thermoplastische Formmasse zu schaffen, die hohe Wärmeformbeständigkeit, gute mechanische Eigenschaften, insbesondere Zugfestigkeiten, eine hohe Kälteflexibilität d. h. Kerbschlagzähigkeit bei tiefen Temperaturen aufweist, die darüber hinaus pelletisierbar ist und insgesamt gegenüber den bekannten binären und ternären Formmassen in Bezug auf eine oder mehrere Eigenschaften verbessert ist. Es ist auch ein Anliegen der Erfindung, mit einfachen Mitteln eine optimale schlagfeste ternäre Formmasse mit gewünschten Eigenschaften herstellen zu können, die sich nicht zufällig als Randprodukt neben anderen bei bekannten Formmassen einfindet. Die gewünschte Formmasse sollte auch hinsichtlich ihrer Schrumpfneigung verbessert sein und sich besonders zur Anwendung im Spritzfußverfahren zum Herstellen komplizierter und maßhaltiger Formteile eignen.

Es wurde nun gefunden, daß die vorangehend genannte Aufgabenstellung mit einfachen Mitteln optimal gelöst wird durch eine ternäre Formmasse mit einem Schmelzindex MFI (230/5) von mindestens 8 g/10 min, einer Zugfestigkeit von mindestens 15 N/mm$^2$ und einer Bruchdehnung von mindestens 450 % auf Basis von Ethylen-Propylen-Mischpolymerisat, Propylen-Homopolymer und Polyethylen, die verbesserte Werte für Schrumpfung und Kerbschlagzähigkeit in der Kälte aufweist, die dadurch gekennzeichnet ist daß sie enthält als

a) Ethylen-Propylen-Mischpolymerisat ein solches teilkristallines Produkt mit einem Ethylengehalt von mindestens 65 Gew.-%, einem Schmelzindex MFI (230/5) von 0,7 bis 2,0 g/10 min und einer Zugfestigkeit > 5,0 N/mm$^2$, in einer Menge von 38 bis 48 Gew.-%,
b) Propylen-Homopolymer ein solches mit einem Schmelzindex MFI (230/5) von 25 bis 65 g/10 min in einer Menge von 27 bis 59 Gew.-%,
c) Polyethylen ein solches mit einem Schmelzindex MFI (230/5) von 15 bis 50 g/10 min in einer Menge von 3 bis 30 Gew.-%.

Es ist völlig überraschend im Hinblick auf die aus der DE-OS-2 821 342 bekannten Abmischungen, daß es durch die Erfindung gelingt, unter Einsatz von teilkristallinen Ethylen-Propylen-Mischpolymerisaten mit einer Zugfestigkeit, die mindestens 5,0 N/mm$^2$ beträgt, ternäre Formmassen mit hoher Schlagfestigkeit, hoher Wärmeformbeständigkeit, hoher Kerbschlagzähigkeit auch bei tiefen Temperaturen von −40°C zu schaffen, die sich zudem hervorragend zu Spritzgußformteilen unter Vermeidung von Schrumpfverarbeiten lassen.

Im Vergleich zu den Formmassen beispielsweise nach der DE-OS-2 828 763 kann die Erfindung einfach verwirklicht werden, da sie einen Weg zeigt, durch Auswahl der Komponenten gemäß ihren Schmelzindizes und unter Einhaltung bestimmter Gewichtsanteile der Komponenten in der Formmasse zuverlässig eine ternäre Formmasse mit den gewünschten Eigenschaften zu schaffen. Von der Polypropylen-Formmasse gemäß der DE-OS 2 828 763 unterscheidet sich die Erfindung wesentlich auch durch ihren hohen Anteil an Ethylen-Propylen-Mischpolymerisat, der zu einer Formmasse mit gegenüber den vorbekannten verbesserten Eigenschaften führt, was bei der Vielzahl der bekannten Formmassen nicht zu erwarten war.

Die Kennzeichnung auf Basis der Schmelzindizes erfolgt auch wegen der hierin enthaltenen Aussage über die Fließfähigkeit und damit Verarbeitbarkeit der Formmasse. Die erfindungsgemäße Formmasse soll insbesondere auch durch Spritzgießen verarbeitbar sein und soll daher einen Schmelzindex MFI (230/5) von wenigstens etwa 8 aufweisen.

Die erfindungsgemäße Formmasse zeichnet sich weiter dadurch aus, daß Ethylen-Propylen-Mischpolymerisat und Propylen-Homopolymer zusammen mit 70 bis 97 Gew.-% in der Formmasse enthalten sind. Das verwendete Ethylen-Propylen-Mischpolymerisat weist vorzugsweise einen Ethylen-Gehalt von mehr als 70 Gew.-% auf. Erfindungsgemäß werden die teilkristallinen Ethylen-Propylen-Mischpolymerisate mit hoher Festigkeit, die auch als very high green strength Kautschuke bekannt sind, eingesetzt. Diese Ethylen-Propylen-Mischpolymerisate sind pelletisierbar und verleihen damit auch insgesamt der Formmasse einen verarbeitungstechnischen Vorteil gegenüber den amorphen oder nahezu amorphen Ethylen-Propylen-Mischpolymerisaten, die nicht pelletisierbar sind, wie sie z. B. in der DE-OS-2 821 342 eingesetzt werden. Bevorzugt wird ein Ethylen-Propylen-Mischpolymer und/oder ein Ethylen-Propylen-Terpolymer bestehend aus 65 bis 82 Gew.-% Ethylen, 18 bis 35 Gew.-% Propylen und 0 bis 8 Gew.-% Terkomponente für die Formmasse eingesetzt. Als Terkomponente werden in der Regel Dicyclopentadien, Alkylidennorbonen, Alkenylnorbonen, Alkadiene und Cycloalkadiene verwendet. Bevorzugt werden für die Formmasse erfindungsgemäß Ethylen-Propylen-Terpolymere mit einer Mindestzugfestigkeit von 8,0 N/mm$^2$, vorzugsweise einer über 20 N/mm$^2$ liegenden Zugfestigkeit eingesetzt. Eine Weiterbildung der Erfindung sieht vor, anstelle von Propylen-Homopolymer anteilig einen Teil Propylen-Mischpolymere mit einem Schmelzindex MFI (230/5) zwischen 15 und 50, vorzugsweise 20 und 40 vorzusehen. Bevorzugt enthalten die Polypropylen-Copolymere einen unter 12 Gew.-% betragenden Ethylen-Gehalt.

Die erfindungsgemäße ternäre Formmasse ist besonders geeignet zum Herstellen von technischen Formteilen, die einerseits hohen Temperaturen bis 100°C, aber auch sehr niedrigen Temperaturen unter −30°C ausgesetzt sind, wobei die übrigen mechanischen Eigenschaften ein ausgewogen hohes Niveau zeigen. Ein bevorzugtes Anwendungsgebiet ist das Herstellen von Stoßfängern für Kraftfahrzeuge, die auch noch Stoßbeanspruchungen bei niedrigen Temperaturen bis −40°C aushalten müssen. Die erfindungsgemäße Formmasse wird auch diesen extremen Beanspruchungen dadurch gerecht, daß sie einerseits zum Erreichen der erforderlichen Kerbschlagzähigkeit bei tiefen Temperaturen einen ausreichenden Anteil von Ethylen-Propylen-Mischpolymerisat aufweist, der jedoch eine gewise Erniedrigung der Wärmeformbeständigkeit mit sich bringt. Dieser Erniedrigung der Wärmeformbeständigkeit wird durch Einsatz einer erfindungsgemäßen Menge ausgewählter Propylen-Homopolymere entgegengewirkt, die die Wärmeformbeständigkeit der Formmasse verbesserten, zugleich die mechanischen Eigenschaften bei tiefen Temperaturen wieder verringert. Die Schmelzbereiche der eingesetzten Propylen-Homopolymere liegen vorzugsweise bei 165°C. Überraschend hat sich herausgestellt, daß die dritte Komponente Polyethylen wieder die Kerbschlagzähigkeit bei tiefen Temperaturen erhöht und die Nachschwindung positiv beeinflußt. Besonders vorteilhaft hat sich ein Polyethylen mit einem MFI (230/5) größer 15, vorzugsweise jedoch zwischen 20 bis 50 erwiesen, das in Mengen zwischen 4 bis 30 Gew.-Teilen bezogen auf die Formmasse, vorzugsweise 5 bis 20 Gew.-% in der Formmasse enthalten ist. Vorteilhaft wird hierbei ein Niederdruckpolyethylen eingesetzt.

Bevorzugte erfindungsgemäße Formmassen, ausgehend von den vorangehend beschriebenen Komponenten mit optimalen Eigenschaften weisen ein Verhältnis der Schmelzindizes MFI (230/5) des Polyethylens zum Ethylen-Propylen-Mischpolymerisat gleich oder größer 15 auf, bevorzugt jedoch größer 25. Hierbei ist es vorteilhaft, zugleich das Verhältnis der Schmelzindizes des Polyäthylens zu dem des Propylen-Homopolymerisates zwischen 0,25 und 3,0 vorzusehen.

Bevorzugte Formmassen nach der Erfindung mit einer ausgewogenen Palette der gewünschten Eigenschaften enthalten 40 bis 45 Gew.-% Ethylen-Propylen-Mischpolymerisat, 35 bis 58 Gew.-% Propylen-Homopolymer und 5 bis 20 Gew.-% Polyethylen.

Die ternären Formmassen nach der Erfindung können auch bekannterweise mit Hilfe der für Kunststoffe üblichen Apparatur wie Walzen, Extruder, Mischer und Kneter hergestellt werden, wobei alle Komponenten gleichzeitig vermischt werden können. Die Vermischung ist vorteilhaft bei erhöhter Temperatur, insbesondere bei einer Temperatur zwischen 180 und 280°C unter Einwirkung von Scherkräften durchzuführen.

Der erfindungsgemäßen Formmasse können zusätzlich bekannte Zusatzstoffe wie Farbmittel, Gleitmittel, Füllstoffe, Antioxydationsmittel, UV-Stabilisatoren, Flammschutzmittel, Fasern od. dgl. zugegeben werden.

Es ist auch möglich, die erfindungsgemäßen ternären Formmassen anderen Kunststoffen beispielsweise zur Verbesserung deren Schlagfestigkeit zuzugeben.

Die Erfindung wird nachfolgend an einigen Beispielen mit Vergleichen erläutert.

Für die Prüfung von Eigenschaften werden folgende Methoden angewendet:

- Schmelzindex MFI (230/5) g/je 10 min nach DIN 53 735 oder MFI (190/2,16) g/10 min,
- Kerbschlagzähigkeit nach DIN 53 453 bei verschiedenen Temperaturen, un = nicht gebrochen; g = gebrochen,
- Bruchdehnung in % nach DIN 53 455,.
- Vicat-Erweichungstemperatur VSTA °C,
- Schrumpf gemessen nach 48 h Lagerung bei Raumtemperatur in mm,
- Zugfestigkeit $N/mm^2$ nach DIN 53 455.

**Beispiel 1**

Eine als Vergleich ausgeführte binäre Mischung aus 43 Gew.-Teilen eines EPDM mit einem MFI von 0,8 wird mit 57 Gew.-Teilen Propylen-Homopolymerisat mit einem MFI von 55 homogenisiert und zu einem Granulat verarbeitet. Das so hergestellte Granulat wird bei 220 bis 260°C Massetemperatur zu einem Formteil in Gestalt eines Stoßfängers verspritzt, das eine Sollänge von 1 436 mm bei Entnahme aus der Spritzgußform aufweist. Durch Lagerung bei Raumtemperatur findet eine Nachschwindung (Schrumpfung) des Formteils statt. Nach 48 h zeigt der Stoßfänger nur noch eine Länge von 1 435,5 mm, d. h. einen Schrumpf von −0,5 mm gegenüber Sollänge. Weitere Eigenschaften finden sich in der Tabelle.

**Beispiel 2**

Eine als Vergleich ausgeführte Mischung aus 40 Gew.-Teilen eines EPDM's mit einem MFI von 0,8 wird mit 50 Gew.-Teilen eines Propylen-Homopolymerisats mit einem MFI von 55 und 10 Gew.-Teilen eines Polypropylen-Copolymeren mit einem MFI von 25 wie in Beispiel 1 homogenisiert und zu Granulat verarbeitet. Ein aus diesem Granulat unter gleichen Spritzbedingungen wie in Beispiel 1 gefertigter Stoßfänger zeigt nach 48 h Lagerung eine Länge von −1,5 mm gegenüber Sollänge. Dieses Beispiel zeigt, daß bereits eine geringe Menge eines Propylen-Mischpolymeren eine weiter verstärkte Schwindung des Formteils bewirkt.

**Beispiel 3**

Als weiteres Vergleichsbeispiel wird eine binäre Mischung aus 48 Gew.-Teilen eines EPDM mit einem MFI von 0,8 und 52 Gew.-Teilen eines Propylen-Homopolymerisates mit einem MFI von 55 hergestellt und zu einem Formteil verspritzt, wie im Beispiel 1 beschrieben. Nach 48 h Lagerung bei Raumtemperatur zeigt das Formteil eine Nachschwindung von ± 0 gegenüber der Sollänge.

Weitere Erläuterungen siehe Tabelle.

**Beispiel 4**

Eine erfindungsgemäße ternäre Formmasse wird aus 43 Gew.-Teilen EPDM mit einem MFI von 0,8 und 47 Gew.-Teilen Propylen-Homopolymerisat mit einem MFI von 25 und 10 Gew.-Teilen Polyäthylen mit einem MFI von 30 hergestellt und wie in Beispiel 1 beschrieben zu einem Stoßfänger verspritzt. Nach 48 h Lagerung bei Raumtemperatur zeigt er einen Schrumpf ± 0 gegenüber der Sollänge.

Weitere Angaben siehe Tabelle.

## Beispiel 5

Als Vergleichsbeispiel wurde aus der DE-PS-2 821 342 das Beispiel 2 der Tabelle 2 übernommen. Hier wird aus 45 Gew.-Teilen eines amorphen EPDM/Kristallinität unter 0,25 % und Mooney Viskosität ML (1 + 4) 125°C von 52 mit einer Zugfestigkeit von 6,5 N/mm$^2$ und 50 Gew.-Teilen Propylen-Homopolymer mit einer Dichte von 0,905 g/cm$^3$ und einem MFI (230/2,16) von 5,2 dg/min entsprechend einem MFI (230/5) von 21 und 5 Gew.-Teilen Polyethylen mit einer Dichte 0,963 g/cm$^3$, MFI (190/2,16) von 8, eine Mischung hergestellt und zu einer Platte verpreßt. Diese Platte zeigt jedoch mit einer Zugfestigkeit von 10,0 N/mm$^2$, Bruchdehnung von 150 % sehr mäßige mechanische Eigenschaften, die auch eine schlechte Kälteflexibilität vermuten lassen.

## Beispiel 6

Ein weiteres Vergleichsbeispiel aus der DE-OS-2 821 342, aus Tabelle 6, Beispiel 1 besteht aus einer Formmasse enthaltend 40 Gew.-Teile EPDM wie in Beispiel 5 beschrieben, 55 Gew.-Teile Propylen-Homopolymer wie in Beispiel 5 beschrieben und 5 Gew.-Teile eines Polyethylens wie in Beispiel 5 beschrieben. Diese Mischung zeigt zwar eine Steigerung der mechanischen Eigenschaften gegenüber Beispiel 5, was auf die Eigenschaften des Polyethylens hoher Dichte zurückgeführt wird, jedoch ist die Masse mit einem Gesamt-MFI (230/5) von 5,2 g/10 min nicht für das Spritzgießen geeignet.

## Beispiel 7

Als weiteres Vergleichsbeispiel wird aus der DE-OS-2 821 342 das Beispiel 4 der Tabelle 7 zitert. Hier wird ein geringfügig kristallines EPDM mit hoher Zugfestigkeit von 12,0 N/mm$^2$, Kristallinität 3 % mit 40 Gew.-Teilen eingesetzt und mit 55 Gew.-Teilen Polypropylen wie in Beispiel 8 und 5 Gew.-Teilen Polyethylen wie in Beispiel 5 verarbeitet. Es ergibt sich ein Produkt mit wesentlich schlechteren mechanischen Eigenschaften wie Beispiel 6, wobei die Formmasse ebenfalls nicht gut spritzbar ist (MFI 6,5).

## Beispiel 8

Wie in Beispiel 1 beschrieben wird eine erfindungsgemäße Mischung aus 42 Gew.-Teilen EPM mit einem MFI von 0,9 und 48 Gew.-Teilen Propylen-Homopolymerisat mit einem MFI von 48 und 10 Gew.-Teilen Polyethylen mit einem MFI von 30 hergestellt und zu einem Stoßfänger verspritzt. Dieser zeigt nach 48 h Lagerung bei Raumtemperatur einen Schrumpf von ± 0 mm gegenüber Sollänge. Weitere Angaben siehe Tabelle.

| Bei-sp. | EPDM EPM Gew.-T. MFI Zugfest. | PP-H Gew.-T. MFI | PP-CO Gew.-T. MFI | PE Gew.-T. MFI 190/2,16 | MFI d. Mischung 230/5 | Vicat °C | Bruch-dehnung % | Zug-festi. N/mm² | °C | -20°C | -40°C | Schrump mm | Vicat | Kerb. | Schrumpf |
|---|---|---|---|---|---|---|---|---|---|---|---|---|---|---|---|
| 1 | 43 0,8 24,8 | 57 55 | | | 17 | 107 | 550 | 28 | un | g | g | -0,5 | gut | sehr schlecht | gut |
| 2 | 40 0,8 24,8 | 50 55 | 10 25 | | 15 | 106 | 576 | 28,7 | un | g | g | -1,5 | gut | sehr schlecht | schlecht |
| 3 | 48 0,8 24,8 | 52 55 | | | 13,2 | 95 | 610 | 20,7 | un | un | g | ±0 | schlecht | gut | gut |
| 4 | 43 0,8 24,8 | 47 25 | | 10 7 | 14,6 | 100 | 640 | 29,8 | un | un | un | ±0 | gut | sehr gut | gut |
| 5 | 45 - 6,5 | 50 21 | | 5 8 | | | 150 | 10,0 | | | | | | mäßig | |
| 6 | 40 - | 55 21 | | 5 8 | 5,2 | | 430 | 21,3 | | g | | | | | |

## Tabelle (Forts.)

| Beisp. | EPDM EPM Gew.-T. MFI Zugfest. | PP-H Gew.-T. MFI | PP-CO Gew.-T. MFI | PE Gew.-T. MFI 190/ 2,16 | MFI d. Mischung 230/5 | Vicat °C | Bruch-dehnung % | Zug-festi. N/mm² | °C | Kerbschlagzähigkeit -20°C | -40°C | Schrump mm | Vicat | Kerb. | Schrumpf |
|---|---|---|---|---|---|---|---|---|---|---|---|---|---|---|---|
| | 6,5 | | | | | | | | | | | | | | |
| 7 | 40 | 55 | | 5 | 6,5 | | | 130 | 12,4 | | | | | | |
| | - | 21 | 8 | | | | | | | | | | | | |
| | 12 | | | | | | | | | | | | | | |
| 8 | 42 | 48 | | 10 | 14,1 | 101 | 630 | 23 | un | un | g | ±0 | gut | gut | gut |
| | 0,9 | 48 | | 7 | | | | | | (- 30°) | | | | | |
| | 5,8 | | | | | | | | | un | | | | | |

## Kommentar zur Tabelle

In der Tabelle sind die aufgeführten Beispiele ergänzt mit den wichtigsten Eigenschaften, die etwas über das gewünschte Anforderungsprofil für so hoch beanspruchte technische Teile wie beispielsweise Stoßfänger aussagen, zusammengestellt.

Der MFI der Gesamtmischung gibt einen Hinweis auf die Fließeigenschaften und damit über die Eignung zum Verarbeiten durch Spritzgießen, hier zeigen MFI-Werte ab etwa 8 die gute Verarbeitbarkeit an. Der Vicat-Wert steht für die gute Wärmeformbeständigkeit, Dehnung und Zugfestigkeit für die allgemeinen mechanischen Eigenschaften, Kerbschlagzähigkeit als Maß für die Kälteflexibilität bei extrem tiefen Temperaturen und der Schrumpf als Maß für die Güte und Maßhaltigkeit der Herstellbarkeit von Spritzguß-Formteilen. Die in der Tabelle vorgenommene Bewertung steht unter dem Gesichtspunkt eines hohen Anforderungsprofils mehrerer Eigenschaften. Es geht hieraus eindeutig hervor, daß oft einseitig gute Eigenschaftswerte mit anderen schlechten gekoppelt sind. Die vielen Vergleichsbeispiele 1 bis 3, 5 bis 7 zeigen eindeutig, daß jeweils ein oder mehrere der gewünschten Eigenschaften unzureichend gemäß dem erfindungsgemäßen Anforderungsprofil sind und es der Erfindung, gemäß Beispielen 4 und 8 vorbehalten ist, ein in allen gewünschten Eigenschaften gutes und sehr gutes Verhalten aufzuweisen.

Beispiele 1 und 3 zeigen, daß binäre thermoplastische Mischungen aus EPDM und Propylen-Homopolymerisat bei zu niedrigem Gehalt an EPDM keine ausreichende Kälteflexibilität (Beispiel 1) und bei höherem Gehalt an EPDM eine niedrige Wärmeformbeständigkeit (Beispiel 3) aufweisen. Eine Optimierung der gewünschten Eigenschaften ist nicht möglich.

Beispiel 2 zeigt, daß durch Zusatz von Propylen-Mischpolymeren zu Mischungen gemäß Beispiel 1 die Nachschwindung der Formteile ungünstig beeinflußt, d. h. vergrößert wird, im übrigen aber auch keine sonstigen Verbesserungen der gewünschten Eigenschaftswerte auftreten.

Beispiel 4 einer erfindungsgemäßen Formmasse zeigt erstmalig ein ausgewogenes Eigenschaftsbild mit guten und sehr guten Werten bezüglich mechanischer Eigenschaften, Kälteflexibilität, Schrumpf Spritzbarkeit und Wärmeformbeständigkeit. Das gleiche gilt für das erfindungsgemäße Beispiel 8, wobei bei –30°C das Formteil den Kerbschlagzähigkeitstest noch übersteht.

Die Beispiele 5, 6 und 7 zeigen bekannte ternäre Formmassen auf Basis amorpher bzw. nahezu amorpher Ethylen-Propylen-Polymerisate, die ein von der Erfindung erheblich abweichendes Eigenschaftsbild, ergeben, insbesondere bereits ihre schlechte Verarbeitbarkeit im Spritzgießverfahren und ihre mäßigen mechanischen Eigenschaften, wie Bruchdehnung und Zugfestigkeit deutlich offenbaren. Diesen Formmassen ist die Erfindung stets überlegen. Insbesondere fällt die breite Streuung der Eigenschaftswerte auf, die eine gesicherte Wahl einer Formmasse mit gewünschten Eigenschaften nicht ermöglichen.

## Patentansprüche

1. Ternäre Formmasse mit einem Schmelzindex MFI (230/5) von mindestens 8 g/10 min, einer Zugfestigkeit von mindestens 15 N/mm² und einer Bruchdehnung von mindestens 450 auf Basis von Ethylen-Propylen-Mischpolymerisat, Propylen-Homopolymer und Polyethylen, die verbesserte Werte für Schrumpfung und Kerbschlagzähigkeit in der Kälte aufweist, *dadurch gekennzeichnet*, daß sie enthält als

a) Ethylen-Propylen-Mischpolymerisat ein solches teilkristallines Produkt mit einem Ethylengehalt von mindestens 65 Gew.-%, einem Schmelzindex MFI (230/5) von 0,7 bis 2,0 g/10 min und einer Zugfestigkeit > 5,0 N/mm², in einer Menge von 38 bis 48 Gew.-%,

b) Propylen-Homopolymer ein solches mit einem Schmelzindex MFI (230/5) von 25 bis 65 g/10 min in einer Menge von 27 bis 59 Gew.-%,

c) Polyethylen ein solches mit einem Schmelzindex MFI (230/5) von 15 bis 50 g/10 min in einer Menge von 3 bis 30 Gew.-%.

6

2. Formmasse gemäß Anspruch 1, dadurch gekennzeichnet, daß das Ethylen-Propylen-Mischpolymerisat und das Propylen-Homopolymer zusammen mit 70 bis 97 Gew.-% in der Formmasse enthalten sind.

3. Formmasse nach einem der Ansprüche 1 oder 2, dadurch gekennzeichnet, daß anstelle des Propylen-Homopolymeren ein Propylen-Mischpolymer mit einem Schmelzindex MFI (230/5) von 15 bis 50, vorzugsweise zwischen 20 und 40 g/10 min, in der Formmasse enthalten ist.

4. Formmasse gemäß Anspruch 3, dadurch gekennzeichnet, daß das Propylen-Mischpolymere einen Ethylenengehalt unter 12 Gew.-% besitzt.

5. Formmasse gemäß einem der Ansprüche 1 bis 4, dadurch gekennzeichnet, daß das Polyethylen einen Schmelzindex MFI (230/5) zwischen 20 und 50 g/10 min besitzt.

6. Formmasse nach einem der Ansprüche 1 bis 5, dadurch gekennzeichnet, daß als Ethylen-Propylen-Mischpolymerisat teilweise oder vollständig ein Ethylen-Propylen-Terpolymer aus
65 bis 82 Gew-% Ethylen
18 bis 35 Gew.-% Propylen
 0 bis  8 Gew.-% Terkomponente

in der Formmasse enthalten ist.

7. Formmasse gemäß Anspruch 6, dadurch gekennzeichnet, daß das Ethylen-Propylen-Mischpolymerisat einen Ethylengehalt von mehr als 70 Gew.-% Ethylen besitzt.

8. Formmasse gemäß Anspruch 7, dadurch gekennzeichnet, daß das Ethylen-Propylen-Terpolymer eine Zugfestigkeit von mehr als 20 N/mm$^2$ besitzt.

9. Formmasse nach einem der Ansprüche 1 bis 8, dadurch gekennzeichnet, daß sie das Ethylen-Propylen-Mischpolymerisat in Mengen von 40 bis 45 Gew.-%, das Propylen-Homopolymer in Mengen zwischen 35 bis 58 Gew.-% und das Polyethylen in Mengen zwischen 5 und 20 Gew.-% enthält.

10. Verwendung einer Formmasse gemäß einem der Ansprüche 1 bis 9 zur Herstellung von Stoßfängern für Kraftfahrzeuge durch Spritzgießen.

**Claims**

1. Ternary moulding composition with a melt index MFI (230/5) of at least 8 g/10 min, a tensile strength of at least 15 N/mm$^2$ and an elongation at break of at least 450 %, based on ethylene-propylene copolymerisate, propylene-homopolymer and polyethylene, which has improved values for shrinkage and notched impact strength in the cold, characterised in that it contains
a)  as ethylene-propylene copolymerisate, a partially crystalline product of such type with an ethylene content of at least 65 % by weight, a melt index MFI (230/5) of 0.7 to 2.0 g/10 min and a tensile strength > 5.0 N/mm$^2$, in an amount of 38 to 48 % by weight,
b)  as propylene-homopolymer, such a substance with a melt index MFI (230/5) of 25 to 65 g/10 min in an amount of 27 to 59 % by weight,
c)  as polyethylene, such a substance with a melt index MFI (230/5) of 15 to 50 g/10 min in an amount of 3 to 30 % by weight.

2. Moulding composition according to claim 1, characterised in that the ethylene-propylene copolymer and the propylene homopolymer are contained together in the moulding composition in an amount of 70 to 97 weight %.

3. Moulding composition according to one of claims 1 or 2, characterised in that, instead of the propylene-homopolymer, a propylene copolymer with a melt index MFI (230/5) of 15 to 50, preferably between 20 and 40 g/10 min, is contained in the moulding composition.

4. Moulding composition according to claim 3, characterised in that the propylene-copolymer possesses an ethylene content below 12 % by weight.

5. Moulding composition according to one of claims 1 to 4, characterised in that the polyethylene has a melt index MFI (230/5) between 20 and 50 g/10 min.

6. Moulding composition according to one of claims 1 to 5, characterised in that an ethylene-propylene terpolymer of
65 to 82 % by weight ethylene
18 to 35 % by weight propylene
 0 to  8 % by weight tercomponent

is contained in the moulding composition partially or completely as ethylene-propylene copolymerisate.

7. Moulding composition according to claim 6, characterised in that the ethylene-propylene copolymerisate possesses an ethylene content of more than 70 % by weight.

8. Moulding composition according to claim 7, characterised in that the ethylene-propylene-terpolymer possesses a tensile strength of more than 20 N/mm².

9. Moulding composition according to one of claims 1 to 8, characterised in that it contains the ethylene-propylene copolymerisate in amounts of 40 to 45 % by weight, the propylene-homopolymer in amounts between 35 to 58 % by weight and the polyethylene in amounts between 5 and 20 % by weight.

10. Use of a moulding composition according to one of claims 1 to 9 for the production of bumpers for motor vehicles by injection moulding.

**Revendications**

1. Masse à mouler ternaire possédant un indice de fluidité à chaud MFI (230/5) d'au moins 8 g/10 min, une résistance à la traction d'au moins 15 N/mm² et un allongement à la rupture d'au moins 450 %, à base de copolymère éthylène/propylène, d'homopolymère du propylène et de polyéthylène, et présentant à froid des valeurs améliorées du retrait et de la résistance au choc sur barreau entaillé, caractérisée en ce qu'elle contient:

  a) en guise de copolymère éthylène/propylène, un produit de ce type, partiellement cristallin, ayant une teneur en éthylène d'au moins 65 % en poids, un indice de fluidité à chaud MFI (230/5) de 0,7 à 2,0 g/10 min et une résistance à la traction supérieure à 5,0 N/mm², en une quantité de 38 à 48 % en poids,
  b) en guise d'homopolymère du propylène, un produit de ce type ayant un indice de fluidité à chaud MFI (230/5) de 25 à 65 g/10 min, en une quantité de 27 à 59 % en poids, et
  c) en guide de polyéthylène, un produit de ce type ayant un indice de fluidité à chaud MFI (230/5) de 15 à 50 g/10 min, en une quantité de 3 à 30 % en poids.

2. Masse à mouler selon la revendication 1, caractérisée en ce que le copolymère éthylène/propylène et l'homopolymère du propylène sont contenus ensemble à raison de 70 à 97 % en poids dans la masse à mouler.

3. Masse à mouler selon l'une des revendications 1 et 2, caractérisée en ce qu'à la place de l'homopolymère du propylène, la masse à mouler contient un copolymère du propylène ayant un indice de fluidité à chaud MFI (230/5) de 15 à 50, de préférence compris entre 20 et 40 g/10 min.

4. Masse à mouler selon la revendication 3, caractérisée en ce que le copolymère du propylène a une teneur en éthylène inférieure à 12 % en poids.

5. Masse à mouler selon l'une des revendications 1 à 4, caractérisée en ce que le polyéthylène a un indice de fluidité à chaud MFI (230/5) compris entre 20 et 50 g/10 min.

6. Masse à mouler selon l'une des revendications 1 à 5, caractérisée en ce que le copolymère éthylène/propylène contenu dans la masse à mouler est, en partie ou en totalité, un terpolymère de l'éthylène et du propylène, constitué de:
65 à 82 % en poids d'éthylène
18 à 35 % en poids de propylène
 0 à  8 % en poids du troisième constituant.

7. Masse à mouler selon la revendication 6, caractérisée en ce que le copolymère éthylène/propylène contient plus de 70 % en poids d'éthylène.

8. Masse à mouler selon la revendication 7, caractérisée en ce que le terpolymère de l'éthylène et du propylène a une résistance à la traction supérieure à 20 N/mm².

9. Masse à mouler selon l'une des revendication 1 à 8, caractérisée en ce qu'elle contient 40 à 45 % en poids de copolymère éthylène/propylène, 35 à 58 % en poids d'homopolymère du propylène et 5 à 20 % en poids de polyéthylène.

10. Utilisation d'une masse à mouler selon l'une des revendications 1 à 9 pour la fabrication de parechocs pour automobiles par moulage par injection.